# FASCICULE DE BREVET EUROPEEN

(11) **EP 3 740 534 B1**
(45) Date de publication et mention de la délivrance du brevet: **31.01.2024**
(21) Numéro de dépôt: 19719551.4
(22) Date de dépôt: 26.03.2019
(51) Int. Cl.: C08L 33/24, C08F 2/10, C08F 2/48, C08F 2/44, C08F 220/54, C08K 3/16, C08K 3/30, C08K 3/32, C08K 3/36

(54) **NOUVELLES SOLUTIONS À BASE D'UNE CHARGE THIXOTROPE ET NOUVEAUX MATÉRIAUX POLYMÉRIQUES OBTENUS À PARTIR DE CES SOLUTIONS UTILISABLES POUR LE PIÉGEAGE D'AGENTS TOXIQUES CHIMIQUES**
NEUE LÖSUNGEN AUF BASIS EINES THIXOTROPEN FÜLLSTOFFS UND AUS DIESEN LÖSUNGEN ERHALTENE, NEUE POLYMERMATERIALIEN, DIE ZUM EINFANGEN TOXISCHER CHEMISCHER MITTEL VERWENDET WERDEN KÖNNEN
NEW SOLUTIONS BASED ON A THIXOTROPIC FILLER AND NEW POLYMERIC MATERIALS OBTAINED FROM THESE SOLUTIONS USABLE FOR THE TRAPPING OF TOXIC CHEMICAL AGENTS

(30) Priorité: 27.03.2018 FR 1852654
(43) Date de publication de la demande: 25.11.2020
(73) Titulaire: Commissariat à l'énergie atomique et aux énergies alternatives, 75015 Paris (FR)
(72) Inventeur: CADRA, Stéphane, 37550 SAINT-AVERTIN (FR); BLONDEL, Benoit, 37170 CHAMBRAY-LES-TOURS (FR); JAEGHERS, Axel, 37540 SAINT-CYR-SUR-LOIRE (FR); CHAMPION, Axelle, 37300 JOUE-LES-TOURS (FR)
(74) Mandataire: Brevalex
(86) Numéro de dépôt international: PCT/FR2019/050687
(87) Numéro de publication internationale: WO 2019/186055

(56) Documents cités:
- WO-A1-2014/127470
- WO-A1-2017/129688
- MANOS GKIKAS ET AL: "Hydrogels That Actuate Selectively in Response to Organophosphates", ADVANCED FUNCTIONAL MATERIALS, vol. 27, no. 6, 6 septembre 2016 (2016-09-06), page 1602784, XP055528043, DE ISSN: 1616-301X, DOI: 10.1002/adfm.201602784
- YAIR SIMO ET AL: "Organophosphate Degrading Microorganisms and Enzymes as Biocatalysts in Environmental and Personal Decontamination Applications", CRC CRITICAL REVIEWS IN BIOTECHNOLOGY, CRC PRESS, BOCA RATON, FL, US, vol. 28, no. 4, 16 décembre 2008 (2008-12-16), pages 265-275, XP009181236, ISSN: 0738-8551, DOI: 10.1080/07388550802455742
- CASTELLANI ROMAIN ET AL: "Efficiency enhancement of decontamination gels by a superabsorbent polymer", COLLOIDS AND SURFACES A: PHYSIOCHEMICAL AND ENGINEERING ASPECTS, vol. 454, 20 janvier 2014 (2014-01-20), pages 89-95, XP029032564, ISSN: 0927-7757, DOI: 10.1016/J.COLSURFA.2014.04.022

## Description

### DOMAINE TECHNIQUE

La présente invention a trait à des solutions utilisables pour le piégeage d'agents toxiques chimiques, tels que des composés chimiques organophosphorés ainsi qu'à des matériaux polymériques obtenus à partir de ces solutions utilisables également pour le piégeage de ces agents.

Du fait de leurs propriétés de piégeage vis-à-vis d'agents toxiques, tels que les composés organophosphorés, ces solutions ou matériaux polymériques peuvent trouver application dans la décontamination de milieux comprenant des composés chimiques organosphosphorés, par exemple, dans certains environnements, comme l'industrie chimique, l'agriculture ou encore dans des secteurs de lutte contre les attaques au gaz chimique.

De manière générale, les composés organophosphorés présents dans ces environnements se présentent sous la forme de composés organiques présentant une toxicité avérée pour l'organisme humain, la concentration moyenne létale par inhalation pouvant être d'au moins 10 mg.min.m⁻³, comme décrit dans J.Org.Chem.1996, 61, 8407-8413*.* En effet, ces composés peuvent être impliqués dans le mécanisme d'inhibition de l'acétylcholinestérase empêchant le relâchement musculaire et pouvant ainsi provoquer la mort par asphyxie.

Ces composés peuvent être compris dans la formulation d'insecticides, de pesticides ou encore d'agents chimiques de combat et se présentent classiquement sous forme de composés organiques huileux hydrosolubles qui, une fois dispersés dans l'environnement, présentent une durée de demi-vie dans l'eau pouvant aller de 5 heures à 80 heures, avec toutefois le risque que les produits de dégradation par hydrolyse dans l'eau restent toxiques pendant une durée de 30 à 60 jours.

Au vu de leur toxicité, de nombreuses recherches ont été entreprises pour mettre au point des solutions curatives aux menaces liées aux composés organophosphorés, un des axes de ces recherches visant à trouver des systèmes pour catalyser le processus de dégradation de ces composés, afin de les rendre rapidement inactifs.

Ces systèmes décontaminants se présentent généralement sous forme de liquides ou de poudres sous forme de sprays ou encore sous forme d'un liquide imbibant une éponge, les principes actifs à l'origine de la décontamination pouvant être d'origine inorganique ou organique.

A titre d'exemples de principes actifs inorganiques, on peut citer les solutions alcalines, telles que des solutions de soude (NaOH), des solutions de potasse (KOH), des solutions d'hydroxyde d'ammonium (NH₄OH), qui ont été les premières solutions décontaminantes à être étudiées à la fin des années 50, en raison de leur efficacité vis-à-vis des composés organosphophorés de combat, tels que le gaz Sarin ou le gaz Soman, qui entrent dans la catégorie des neurotoxiques de type G, de tels systèmes étant décrits dans Act.Chem.Scand. 1957, 11, 1131-1142.

Du point de vue du mécanisme d'action de ces solutions alcalines à l'égard des composés organophosphorés, il a été démontré qu'elles permettent d'accroître les cinétiques d'hydrolyse des gaz Sarin et Soman en augmentant la valeur de pH du milieu, la durée de demi-vie étant réduite à 8 minutes en milieu basique. En revanche, l'utilisation de solutions alcalines s'avère inefficace vis-à-vis de composés organophosphorés plus persistants, tels que les agents neurotoxiques de type V (et plus spécifiquement les agents VX et VR-55).

Pour ces agents neurotoxiques de type V, de nouvelles solutions ont été proposées, comme cela est décrit dans J.Org.Chem. 2009, 74, 329-338, où, pour améliorer l'hydrolyse de ces agents, il est proposé de les adsorber sur un mélange pulvérulent composé de fluorure de potassium (KF) et d'alumine (Al₂O₃), ce mélange permettant, en présence d'eau, de générer de la potasse (KOH), ce qui induit une augmentation du pH du milieu.

A titre d'exemples de principes actifs organiques, il a été proposé d'utiliser des composés organiques α-nucléophiles, c'est-à-dire un composé comprenant un groupe nucléophile adjacent à un atome porteur d'un doublet électronique, lequel doublet a pour effet de renforcer le caractère nucléophile du composé. Des composés répondant à cette définition et efficaces pour la décontamination d'un milieu comprenant des composés organophosphorés tels que des agents de type G ou V, sont les composés oximates, comme la 2,3-butanedione monoxime.

Comme alternative, il a été également proposé d'intégrer ces fonctions oximates directement dans un polymère, par exemple, en partant d'un polymère de base du type polyacrylonitrile. Les groupes amidoximates ainsi générés ont un caractère nucléophile élevé avec un pKa de l'ordre de 11 à 12 (contre 8, pour des oximes classiques), comme décrit dans Ind.Eng.Chem.Res. 2009, 48, 1650-1659, les polymères résultant présentant une efficacité élevée en dispersion dans l'eau avec des durées de demi-vie respectives de 5 minutes et inférieures à 3 minutes pour le gaz VX et le gaz sarin.

WO2017129688 décrit l'utilisation des matériaux hydrogels pour la séquestration de composés chimiques organophosphorés.

Aussi, au vu de ce qui existe, les inventeurs se sont proposé de mettre au point de nouveaux systèmes utilisables pour la décontamination en agents toxiques chimiques et, plus particulièrement, en composés organophosphorés et qui, outre leur efficacité, sont d'utilisation simple et adaptés à tous types de substrats sur lesquels les agents toxiques chimiques peuvent se trouver.

### EXPOSÉ DE L'INVENTION

Ainsi, l'invention, tel que défini par les revendications annexées, a trait à des solutions utilisables pour le piégeage d'au moins un agent toxique chimique, tel qu'un composé organophosphoré, lesdites solutions comprenant au moins un solvant protique, au moins un monomère comportant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photopolymérisation, au moins une charge thixotrope et au moins un agent choisi parmi les halogénures alcalins, les phosphates alcalins, les sulfates alcalins et les mélanges de ceux-ci.

Par solution, on précise qu'il s'agit d'un mélange liquide homogène des ingrédients susmentionnés, ce qui signifie que ceux-ci sont tous utilisés de sorte à être solubles dans le solvant protique de la solution.

Par solvant protique, on précise que l'on entend un solvant polaire présentant au moins un atome d'hydrogène susceptible d'intervenir dans la formation de liaisons hydrogène, un exemple de solvant protique particulièrement avantageux pour l'invention étant l'eau, auquel cas les solutions de l'invention peuvent être qualifiées de solutions aqueuses. Le solvant protique, tel que l'eau, peut être présent dans la solution à hauteur de 40 à 60% en volume par rapport au volume total de la solution.

Par groupe (alkyl)acrylique, groupe (alkyl)acrylate ou groupe (alkyl)acrylamide, on précise que l'on entend respectivement :
- pour le groupe (alkyl)acrylique, un groupe acrylique ou un groupe alkylacrylique (ce qui signifie qu'un groupe alkyle est présent sur le carbone porteur de la double liaison et du groupe -CO-) ;
- pour le groupe (alkyl)acrylate, un groupe acrylate ou un groupe alkylacrylate (ce qui signifie qu'un groupe alkyle est présent sur le carbone porteur de la double liaison et du groupe -CO-) ; et
- pour le groupe (alkyl)acrylamide, un groupe acrylamide ou un groupe alkylacrylamide (ce qui signifie qu'un groupe alkyle est présent sur le carbone porteur de la double liaison et du groupe -CO-).

Un exemple de groupe (alkyl)acrylique, groupe (alkyl)acrylate ou groupe (alkyl)acrylamide est respectivement un groupe (méth)acrylique, un groupe (méth)acrylate ou un groupe (méth)acrylamide.

Par charge thixotrope, on entend une charge apte à conférer à la solution, dans laquelle elle est incluse, des propriétés thixotropiques, ce qui signifie que la solution présente une viscosité apparente élevée, qui diminue au cours du temps, lorsqu'elle est soumise à une sollicitation mécanique, tel qu'une agitation ou un cisaillement. En d'autres termes, la présence d'au moins une charge thixotrope dans la solution permet de générer des liaisons cohésives de faible énergie au sein de cette solution de manière à lui conférer des propriétés de gel, telles qu'une haute viscosité et, de ce fait, un écoulement limité, ces liaisons, dégradables lors d'une sollicitation mécanique, se régénérant spontanément une fois la solution au repos. Il peut être utilisé également l'expression de « charge rhéofluidifiante » au lieu de « charge thixotrope ».

Comme mentionné ci-dessus, les solutions de l'invention comprennent au moins un monomère comprenant un groupe (alkyl)acrylique, un groupe (alkyl)acrylate ou un groupe (alkyl)acrylamide, de tels monomères pouvant répondre à la formule (I) suivante : 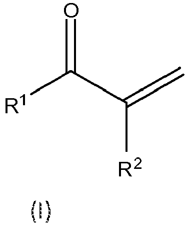 dans laquelle :
-R¹ représente -OR' avec R' représentant un atome d'hydrogène ou un élément alcalin (comme le sodium ou le potassium); -OR³ avec R³ représentant un groupe alkyle, de préférence, comprenant de 1 à 4 atomes de carbone (tel qu'un groupe méthyle, un groupe éthyle) ; ou -NR⁴R⁵ avec R⁴ et R⁵ représentant, indépendamment l'un de l'autre, un atome d'hydrogène ou un groupe alkyle, de préférence, comprenant de 1 à 4 atomes de carbone (tel qu'un groupe méthyle, un groupe éthyle) ;
-R² représente un atome d'hydrogène ou un groupe alkyle, de préférence, comprenant de 1 à 4 atomes de carbone (tel qu'un groupe méthyle, un groupe éthyle).

Avantageusement, le ou les monomères de l'invention comprennent un groupe (alkyl)acrylamide, tels que ceux répondant à la formule (II) suivante : 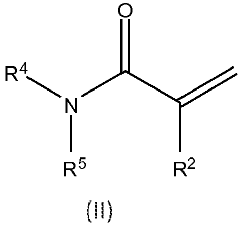 dans laquelle :
- R⁴ et R⁵ sont tels que définis ci-dessus ;
- R¹ est tel que défini ci-dessus,

En particulier, il peut s'agir d'un monomère de formule (II), dans lequel R² est un atome d'hydrogène et R⁴ et R⁵ représentent un groupe méthyle, un tel monomère correspondant au N,N'-diméthylacrylamide.

Le ou les monomères peuvent être présents dans la solution à hauteur de 40 à 60% en volume par rapport au volume total de la solution. A titre d'exemple, lorsque le monomère est le N,N'-diméthylacrylamide, il peut être présent à hauteur de 47,8% en volume par rapport au volume total de la solution.

Les solutions de l'invention comprennent également au moins un agent de réticulation comprenant au moins deux groupes choisis parmi les groupes (alkyl)acryliques, (alkyl)acrylates, (alkyl)acrylamides, ce qui signifie en d'autres termes qu'il s'agit d'un composé comprenant, par exemple :
- au moins deux groupes (alkyl)acryliques ;
- au moins deux groupes (alkyl)acrylates ;
- au moins deux groupes (alkyl)acrylamides ;
- au moins un groupe (alkyl)acrylique et au moins un groupe (alkyl)acrylate ;
- au moins un groupe (alkyl)acrylique et au moins un groupe (alkyl)acrylamide ; ou
- au moins un groupe (alkyl)acrylate et au moins un groupe (alkyl)acrylamide.

Avantageusement, le ou les agents de réticulation sont des agents comprenant au moins deux groupes (alkyl)acrylates, tels que ceux répondant à la formule (III) suivante : 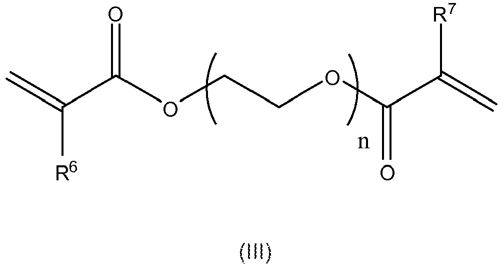 dans laquelle :
- R⁶ et R⁷ représentent, indépendamment l'un de l'autre, un atome d'hydrogène ou un groupe alkyle, par exemple, comprenant de 1 à 4 atomes de carbone (par exemple, un groupe méthyle, un groupe éthyle) ;
- n correspond au nombre d'occurrence du motif pris entre parenthèse, ce nombre allant de 1 à 15.

A titre d'exemple, un agent de réticulation utilisable dans les solutions de l'invention est un agent de formule (III), dans laquelle R⁶ et R⁷ sont des groupes méthyles, cet agent correspondant ainsi à un diméthacrylate de polyéthylèneglycol.

Il est tout à fait envisageable d'utiliser plusieurs agents de réticulation distincts entrant dans le cadre de la définition des agents de formule (III) définie ci-dessus.

Il s'entend également que les agents de réticulation sont distincts des monomères utilisés dans les solutions de l'invention.

En particulier, il peut être utilisé un mélange de di méthacrylate de polyéthylèneglycol de masse molaire moyenne de 750 g/mol, ce qui correspond à un mélange de plusieurs molécules de formule (III) définie ci-dessus, avec un nombre d'occurrence moyen du motif éthylèneglycol de 13,2. Le ou les agents réticulants peuvent être présents dans la solution à hauteur de 1 à 5% en volume par rapport au volume total de la solution.

Lorsqu'il s'agit du mélange de diméthacrylate de polyéthylèneglycol susmentionné, ce mélange peut être présent dans la solution à hauteur de 1,6% en volume par rapport au volume total de la solution.

Les solutions comprennent aussi au moins un amorceur de photopolymérisation (pouvant également être dénommé photoamorceur), lequel amorceur est un composé capable de générer des radicaux libres, lorsqu'il est soumis à un rayonnement approprié (par exemple, un rayonnement UV compris entre 350 et 420 nm). Les radicaux ainsi formés vont ainsi réagir avec les sites réactifs des composés présents dans la solution (ici, les fonctions polymérisables des monomères et des agents de réticulation) entraînant ainsi la polymérisation de ces composés. Ce ou ces amorceurs sont, avantageusement, solubilisés par au moins un des ingrédients constitutifs de la solution (par exemple, le solvant protique).

Le ou les amorceurs de photopolymérisation susceptibles d'être utilisés dans les solutions de l'invention peuvent être des amorceurs de la famille des cétones aromatiques, tels le 1-hydroxy-cyclohexylphénylcétone (connu également sous les appellations commerciales IRGACURE^{®} 184 ou CPK^{®}) ou le (phénylphosphoryl)bis(mésitylméthanone) (connu sous l'appellation IRGACURE^{®} 819) ou un mélange de ces deux photoamorceurs.

Le ou les amorceurs de photopolymérisation peuvent être présents dans la solution à hauteur de 1 à 15 g/L. A titre d'exemple, lorsque l'amorceur est l'IRGACURE^{®} 184, il peut être présent à hauteur de 11,5 g/L.

Par ailleurs, les solutions de l'invention comprennent également une charge thixotrope, laquelle est une charge organique, une charge inorganique ou un mélange de celles-ci.

La charge thixotrope organique est choisie parmi un polyalcool vinylique ou des copolymères à base de motifs acrylates et/ou méthacrylates.

La charge thixotrope inorganique est choisie parmi la silice colloïdale, la silice pyrogénée et les mélanges de celles-ci et, plus spécifiquement, une silice pyrogénée présentant une surface spécifique allant de 100 à 500 m²/g et, par exemple, un diamètre moyen de particules inférieur à 1 µm.

Avantageusement, la charge thixotrope peut être constituée d'une seule charge inorganique et, plus spécifiquement, de silice pyrogénée ou peut être constituée par un mélange d'une charge inorganique et d'une charge organique, par exemple, un mélange de silice pyrogénée et d'alcool polyvinylique.

La ou les charges thixotropes peuvent être présentes dans la solution à hauteur de 1 à 10% massique de la masse totale de la solution.

Enfin, les solutions de l'invention comprennent au moins un agent choisi parmi les halogénures alcalins, les phosphates alcalins, les sulfates alcalins et les mélanges de ceux-ci.

Les auteurs de l'invention ont constaté que ces agents contribuent à neutraliser les composés organophosphorés et, notamment, des composés organophosphorés de combat de type V, qui sont des composés comprenant un atome de soufre, qui est connecté à un groupe phosphonate, les agents susmentionnés étant aptes à couper les liaisons phosphore-soufre pour en accélérer l'hydrolyse.

En outre, les agents susmentionnés permettent d'augmenter la force ionique des solutions les contenant, ce qui permet, entre autres, d'augmenter le pouvoir séquestrant des composés organophosphorés par pression osmotique.

Le ou les agents peuvent être présents dans la solution à hauteur de 1 à 15 g/L ou de 1 à 5% massique par rapport à la masse totale de la solution.

Plus spécifiquement, le ou les agents peuvent être choisis parmi les fluorures alcalins.

Un agent particulièrement efficace et utilisable dans les solutions de l'invention est le fluorure de potassium, lequel peut être, par exemple, présent dans la solution à hauteur de 11,5 g/L.

A titre d'exemple, les solutions de l'invention peuvent être composées exclusivement d'au moins un solvant protique, d'au moins un monomère comportant un groupe (alkyl)acrylique, (alkyl)acrylate ou (alkyl)acrylamide, d'au moins un agent de réticulation comprenant au moins deux groupes choisis parmi les groupes (alkyl)acrylique, (alkyl)acrylate ou (alkyl)acrylamide, d'au moins un amorceur de photopolymérisation, d'au moins une charge thixotrope et d'au moins un agent choisi parmi les halogénures alcalins, les phosphates alcalins, les sulfates alcalins et les mélanges de ceux-ci.

Une solution conforme à l'invention est une solution comprenant ou constituée exclusivement des ingrédients suivants :
- comme solvant protique, de l'eau ;
- comme monomère, du N,N'-diméthylacrylamide ;
- comme agent de réticulation, un diméthacrylate de polyéthylèneglycol ou un mélange de ceux-ci ;
- comme amorceur de photo polymérisation, du 1-hydroxy-cyclohexylphénylcétone (connu également sous l'appellation commerciale IRGACURE^{®} 184) ;
- comme charge thixotrope, de la silice pyrogénée ou un mélange de silice pyrogénée et d'alcool polyvinylique ; et
- comme agent, du fluorure de potassium.

Les solutions de l'invention constituent des formulations liquides applicables sur une large gamme d'objets contaminés par des composés organophosphorés du fait de la bonne compatibilité de ces solutions vis-à-vis d'une large gamme de surfaces (telle qu'une surface métallique comme une surface en aluminium, une surface recouverte d'une couche de peinture, une surface émaillée ou une surface en matériau plastique).

On précise que, par bonne compatibilité, on entend qu'aucune dégradation (telle qu'un phénomène de corrosion, de coloration, de gonflement, d'écaillage ou d'altération perceptible à l'œil nu) n'est visible après 1 heure de mise en contact avec les solutions de l'invention.

Une fois appliquées sur une telle surface, par exemple, par enduction, injection ou pulvérisation, les solutions de l'invention, grâce à la présence de la ou les charges thixotropes, restent stables sur la surface à traiter sans phénomène de ruissellement, quand bien même la surface à traiter est une surface inclinée. De plus, les solutions, de par leurs propriétés intrinsèques liées à la nature des ingrédients susmentionnés, vont pouvoir intégrer, par diffusion naturelle et miscibilité naturelle, les agents toxiques chimiques, tels que les composés organophosphorés initialement présents sur la surface. Les solutions ayant capté ces agents toxiques peuvent être ensuite gélifiées sous l'influence d'un rayonnement naturel ou artificiel (ce qui implique l'application d'un rayonnement autre que le rayonnement de la lumière naturelle). Plus spécifiquement, sous l'effet du rayonnement adéquat, le ou les amorceurs de photopolymérisation sont activés et engendre l'initiation de polymérisation du ou des monomères et du ou des agents de réticulation de la solution. Il est à noter également, que, par un effet de synergie non anticipé entre la ou les charges thixotropes et la ou les amorceurs de polymérisation, les durées de prise de gel ont été drastiquement réduites par rapport à des solutions dépourvues de charge thixotrope. A l'issue de la polymérisation, il en résulte ainsi un figement de la solution sous forme d'un matériau polymère, qui se présente sous forme d'un gel cohésif (pouvant être qualifié d'hydrogel lorsque le solvant protique est de l'eau), dans lequel les agents toxiques sont physiquement piégés dans la solution subsistante, laquelle est elle-même intégralement piégée dans le réseau polymérique du gel. Ce gel cohésif constitue une membrane de confinement, intègre et manipulable, qui peut être ensuite retirée mécaniquement, par exemple, par simple pelage de la surface de substrat, laissant ainsi un substrat décontaminé. De ce fait, les agents toxiques ainsi piégés sont évacués de la surface contaminée sans nécessiter l'usage de dispositifs particuliers de rinçage, récupération ou traitement d'effluents. Le matériau polymérique constitue un matériau de confinement des agents toxiques chimiques présents initialement sur la surface à décontaminer.

Il est à noter également que, du fait de la réactivité de la solution vis-à-vis des composés organophosphorés, plus particulièrement les toxiques de combat ou tout autre composé organophosphoré présentant une liaison phosphore-halogène, une liaison phosphore-soufre ou une liaison hydrolysable, les composés organophosphorés piégés dans le gel peuvent être naturellement dégradés *in situ.*

L'invention a ainsi trait également à un matériau polymérique susceptible d'être obtenu par polymérisation d'une solution conforme à l'invention, ledit matériau comprenant un polymère issu de la polymérisation du ou des monomères et du ou des agents de réticulation définis ci-dessus (en d'autres termes, le polymère comprend des motifs répétitifs issus de la polymérisation du ou des monomères et du ou des agents de réticulation) piégeant, en son sein, une phase liquide (par exemple, une phase comprenant un solvant protique, tel que l'eau) comprenant au moins une charge thixotrope et au moins un agent choisi parmi les halogénures alcalins, les phosphates alcalins, les sulfates alcalins et les mélanges de ceux-ci.

Lorsque la phase liquide comprend, comme solvant protique, de l'eau, le matériau polymérique susmentionné peut être qualifié de matériau hydrogel.

Par matériau hydrogel, on précise qu'il s'agit un matériau se présentant sous la forme d'un gel constitué d'un polymère dans lequel est retenue une phase aqueuse, qui correspond classiquement au milieu de polymérisation (c'est-à-dire le milieu dans lequel a eu lieu la polymérisation pour former le polymère constitutif du matériau hydrogel), qui a absorbé, dans notre cas de figure, les composés organophosphorés. De par la flexibilité du réseau polymère constituant l'hydrogel, un tel matériau est capable classiquement d'absorber une masse en eau pouvant dépasser de 100 fois la masse de l'édifice polymère et, dans notre cas de figure, au moins 5 fois la masse de l'édifice polymère.

Par polymère, on entend, classiquement, au sens de l'invention, un composé constitué par l'enchaînement d'un ou plusieurs motifs répétitifs.

Par motif répétitif, on entend, classiquement, au sens de l'invention, un groupe organique bivalent (c'est-à-dire un groupe formant pont) issu d'un monomère après polymérisation de celui-ci, la formule du motif répétitif correspondant à celle du monomère dont la double liaison a été remplacée par deux atomes d'hydrogène portés par les atomes de carbone porteurs de la double liaison dans le monomère.

Le polymère comprend des motifs répétitifs issus de la polymérisation du ou des monomères et du ou des agents de réticulation, ce qui signifie en d'autres termes, que ce polymère est un polymère réticulé, lequel peut comprendre plusieurs chaînes comprenant un ou plusieurs motifs répétitifs issus de la polymérisation du ou des monomères reliées entre elles par un ou plusieurs motifs répétitifs (pouvant être ainsi qualifiés de motifs de réticulation) issus de la polymérisation du ou des agents de réticulation.

A titre d'exemple, le polymère peut comprendre un motif répétitif issu de la polymérisation d'un monomère de formule (I) telle que définie ci-dessus, ce motif répétitif répondant ainsi à la formule (I') suivante : 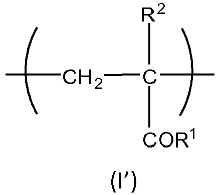
avec R¹ et R² étant tels que définis ci-dessus, et
encore plus spécifiquement, le polymère peut comprendre un motif répétitif issu de la polymérisation d'un monomère de formule (II) telle que définie ci-dessus, ce motif répétitif répondant ainsi à la formule (II') suivante : 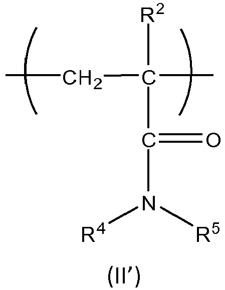 dans laquelle les R², R⁴ et R⁵ sont tels que définis ci-dessus, et plus particulièrement, R² est un atome d'hydrogène et R⁴ et R⁵ représentent un groupe méthyle, auquel cas le motif répétitif répond à la formule (II") suivante : 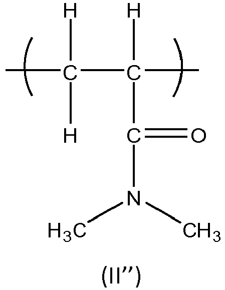 ce motif répétitif étant issu de la polymérisation du monomère N,N'-diméthylacrylamide.

A titre d'exemple, le polymère peut comprendre, en outre, un motif répétitif issu de la polymérisation d'un agent de réticulation de formule (III) telle que définie ci-dessus, ce motif répétitif répondant ainsi à la formule (III') suivante : 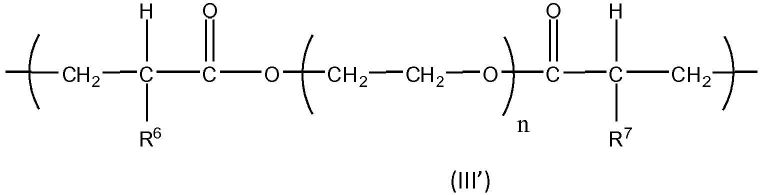 dans laquelle les R⁶, R⁷ et n sont tels que définis ci-dessus et, plus particulièrement, R⁶ et R⁷ sont des groupes méthyles.

En particulier, un polymère susceptible d'entrer avantageusement dans la constitution de l'invention est un polymère réticulé comprenant plusieurs chaînes comprenant un motif répétitif de formule (II) telle que définie ci-dessus (ou plus spécifiquement un motif répétitif de formule (II') ou (II")), lesdites chaînes étant liées entre elles par un motif répétitif de formule (III'), lequel motif répétitif constituant ainsi un motif de réticulation.

D'un point de vue structural, le matériau hydrogel se présente avantageusement, sous forme d'une membrane, par exemple, une membrane plane présentant une épaisseur pouvant aller de 1 mm à 2 cm, la membrane pouvant remplir une fonction de patch.

Comme mentionné ci-dessus, les solutions et les matériaux polymériques de l'invention sont, de par leurs ingrédients, aptes à séquestrer ou piéger des composés organosphorés.

Aussi, l'invention a également trait à :
- l'utilisation d'une solution ou d'un matériau polymérique conforme à l'invention pour le piégeage d'au moins un agent toxique chimique, tel qu'un composé organosphosphoré ; et
- un procédé de piégeage d'un agent toxique chimique, tel qu'un composé organophosphoré, présent sur une surface contaminée par ledit agent toxique chimique, ledit agent toxique chimique étant, par exemple, un composé organophosphoré.

Plus spécifiquement, ce procédé comprend les étapes suivantes :
- une étape de mise en contact de la solution conforme à l'invention avec la surface contaminée ;
- une étape de formation d'un matériau polymérique tel que défini ci-dessus par polymérisation du ou des monomères et du ou des agents de réticulation présents dans la solution ;
- une étape de retrait du matériau polymérique ainsi formée de ladite surface, moyennant quoi ladite surface est ainsi appauvrie voire dénuée en ledit agent toxique chimique.

L'étape de mise en contact peut être réalisée par enduction de la surface à décontaminer par la solution ou par pulvérisation de la solution sur la surface à décontaminer.

L'étape de formation du matériau polymérique peut être réalisée par application d'un rayonnement pour initier la photopolymérisation grâce à l'action des amorceurs de photopolymérisation.

Ce rayonnement peut appartenir, avantageusement, au domaine des rayonnements ultraviolets, c'est-à-dire des rayonnements présentant au moins une longueur d'onde du domaine des ultraviolets, soit une longueur d'onde comprise entre 350 nm et 420 nm.

L'intensité du rayonnement peut être comprise entre 1000 et 10 000 W/m².

L'origine du rayonnement peut être naturelle (par exemple, l'exposition à la lumière naturelle du soleil) ou artificielle, telle que, par exemple, le rayonnement issu d'une lampe UV. A titre d'exemple, une source lumineuse artificielle utilisable dans le cadre de l'invention peut être une lampe UV émettant une longueur d'onde de 405 nm avec une puissance de 9000 W/m².

L'invention va être, à présent, décrite à la lumière des exemples ci-dessous, ces exemples n'étant fournis qu'à titre d'illustration de l'invention et n'en constituant en aucun cas une limitation.

### EXPOSÉ DÉTAILLÉ DE MODES DE RÉALISATION PARTICULIERS

### EXEMPLE 1

Cet exemple illustre la préparation d'une solution conforme à l'invention.

Dans un pilulier opaque de 30 mL, sont introduits 11,0 mL d'eau distillée et 1,1 g de silice pyrogénée de marque Cabot^{®} (référence CAB-O-SIL^{®} M-5), dont le diamètre moyen de particules est compris entre 0,2 et 0,3 µm et la surface spécifique est de 200 m²/g. L'ensemble est homogénéisé par agitation dans un appareil du type Speedmixer à 2000 t/min pendant 45 secondes.

10,4 mL de N,N'-diméthylacrylamide, 0,35 mL de poly(éthylèneglycol)diméthacrylate de masse molaire moyenne de 750 g/mol, 0,25 g d'IRGACURE^{®} 184 et 0,25 g de fluorure de potassium sont ensuite ajoutés à la solution. L'ensemble est mélangé par agitation magnétique pendant 45 minutes.

La solution obtenue à l'issue de cet exemple comporte une charge thixotrope (la silice) à hauteur de 4,8% de la masse totale de la solution et du fluorure de potassium à hauteur de 1,09% de la masse totale de la solution.

### EXEMPLE 2

Dans cet exemple, la procédure est similaire à celle décrite à l'exemple 1, si ce n'est que la quantité de silice pyrogénée introduite est de 0,92 g à la place de 1,1 g.

La solution obtenue à l'issue de cet exemple comporte une charge thixotrope (la silice) à hauteur de 4,0 % de la masse totale de la solution et du fluorure de potassium à hauteur de 1,1 % de la masse totale de la solution.

### EXEMPLE 3

Dans cet exemple, la procédure est similaire à celle décrite à l'exemple 1, si ce n'est que la silice pyrogénée est remplacée par un mélange thixotrope constituée par 0,7 g de silice pyrogénée telle que définie à l'exemple 1 et 1,1 g d'alcool polyvinylique (PVA).

La solution obtenue à l'issue de cet exemple comporte une charge thixotrope (silice + PVA) à hauteur de 7,6% de la masse totale de la solution et du fluorure de potassium à hauteur de 1,05% de la masse totale de la solution.

### EXEMPLE 4

Dans cet exemple, la procédure est similaire à celle décrite à l'exemple 1, à la différence qu'aucune charge thixotrope n'a été ajoutée.

La solution obtenue à l'issue de cet exemple comporte du fluorure de potassium à hauteur de 1,14% de la masse totale de la solution.

### EXEMPLE 5

Dans cet exemple, les solutions préparées aux exemples précédents sont testées pour déterminer :
- la prise de gel ;
- le fluage ; et
- l'efficacité décontaminante.

### a) Evaluation de la prise de gel

Les solutions susmentionnées ont été polymérisées par insolation artificielle dans un four UV muni d'ampoules LED de longueur d'onde 405 nm et d'une puissance de 9000 Watts/m² et par insolation naturelle indirecte (dépôt simple de la solution de l'invention dans un local muni d'une fenêtre). Une solution d'intérêt est une solution pour laquelle, dans le contexte défini ci-dessus, la durée de prise du gel est inférieure à 1 minute.

A différents intervalles de temps, la prise de gel est déterminée par palpation. Les résultats obtenus sont présentés ci-dessous :

| Solution | Durée de prise de gel apparente | |
|---|---|---|
| | Insolation artificielle | Insolation naturelle |
| Exemple 1 (1, 1 g silice) | < 30 secondes | Entre 12 minutes et 1 heure* |
| Exemple 2 (0,92 g silice) | < 30 secondes | Entre 12 minutes et 1 heure* |
| Exemple 3 (0,7 g silice + 1,1 g PVA) | ≤1 minute | Non déterminé |
| Exemple 4 (0 g silice) | 4 minutes | > 1,5 heure |

| | | |
|---|---|---|
| * : variations constatées en fonction des conditions climatiques | | |

Il a été constaté que, par un effet inattendu, l'incorporation d'une charge thixotrope permet d'améliorer drastiquement la vitesse de prise de gel des composés de l'invention par rapport à une formulation similaire dépourvue desdites charges.

### b) Evaluation du fluage

1 mL de chaque solution décrite précédemment a été prélevé et déposé par seringue sur une plaque de verre, elle-même posée sur un support métallique incliné à 40°. Le déplacement des gouttes de solution a été mesuré sur une période de 30 minutes. Il est à noter qu'une solution efficace est une solution présentant un fluage minime, lequel correspondant à une vitesse d'écoulement inférieure à 1 mm/minute sur une période de 30 minutes.

| Solution | Déplacement | Vitesse de fluage |
|---|---|---|
| Exemple 1 (1,1 g silice) | 1 à 2 mm | 0,06 mm/min |
| Exemple 2 (0,92 g silice) | < 1 mm | < 0,03 mm/min |
| Exemple 3 (0,7 g silice + 1,1 g PVA) | 10 mm | 0,33 mm/min |
| Exemple 4 (0 g silice) | > 50 mm | > 1,6 mm/min |

Ainsi, les solutions de l'invention présentent un déplacement par fluage significativement réduit par rapport à la solution comparative dépourvue de charge thixotrope (Exemple 4). Il est toutefois à noter que ces résultats proviennent d'un effet combiné avec la prise de gel, celle-ci pouvant intervenir à partir de 12 minutes après dépôt de la solution.

### c) Evaluation de l'efficacité décontaminante

10 échantillons de tests, plans et de dimensions 2,5 cm x 2,5 cm, sont réalisés par découpe d'une plaque d'aluminium brut et d'une plaque de faïence, à raison de 5 échantillons d'aluminium et 5 échantillons de faïence. Chaque échantillon est rincé à l'eau et à l'éthanol puis séché.

Sur chacun des échantillons sont déposés 10 µL du simulant méthylphosphonate de méthyle (DMMP). On précise qu'un simulant est un composé disposant de propriétés physico-chimiques similaires aux composés organophosphorés de combat (par exemple, en termes de morphologie, de solubilité, de température d'ébullition) tout en étant peu ou pas nocifs vis-à-vis de l'organisme humain.

Afin de s'approcher davantage des conditions opératoires réelles, un temps d'attente de 10 minutes est respecté afin de permettre au simulant de pénétrer dans les porosités éventuelles de l'échantillon.

A l'issue de ce temps d'attente, un échantillon de chaque matériau est récupéré et rincé avec 2 x 0,5 mL d'éthanol absolu. Une prise essais de chacune des solutions de rinçage est effectuée puis celle-ci est analysée par chromatographie en phase gazeuse couplée à de la spectrométrie de masse GC-MS. L'aire du signal correspondant au DMMP sur le chromatogramme est relevée et constituera la valeur comparative.

Parallèlement, sur chaque zone contaminée au DMMP des autres échantillons sont déposés 200 µL de la solution de l'invention décrite à l'exemple 2. Deux échantillons de chaque matériau sont alors immédiatement placés dans un four UV puis irradiés à 405 nm à raison de 9000 Watts/m² pendant une minute, tandis que les 4 échantillons restants (2 échantillons en aluminium + 2 échantillons en faïence) sont conservés en l'état dans le local (exposition à lumière naturelle indirecte). Une heure après la mise en contact de la solution de l'invention avec les échantillons, le matériau résultant, qui a alors pris l'aspect d'une membrane souple pour les 8 échantillons, est retiré par pelage manuel à l'aide d'une pince.

Chaque support est rincé avec 2 x 0,5 mL d'éthanol absolu. Une prise d'essai de chaque solution de rinçage est effectuée. Celles-ci sont analysées par GC-MS, puis l'aire de chaque signal correspondant au DMMP est divisée par la valeur comparative précédemment obtenue pour chaque matériau respectif de manière à calculer le pourcentage de DMMP résiduel. Pour chaque matériau, une valeur moyenne par mode d'insolation est calculée pour chaque paire d'échantillons.

Lors de ces essais, aucune trace de DMMP n'a été détectée sur l'ensemble des supports traités avec le composé de l'invention, ce qui signifie que la quantité de DMMP est inférieure au seuil de détection de l'appareil.

Aucune dégradation visuelle n'est visible sur les échantillons. Les mesures effectuées sont résumées ci-dessous :

| Solution : Exemple 2 (0,92 g de silice) | % de DMMP résiduel après 1h de mise en contact | |
|---|---|---|
| | Insolation artificielle (1 min à 405 nm/9000 W/m²) | Insolation naturelle (1h, exposition indirecte) |
| Sur aluminium | < 0,1% | < 0,1% |
| Sur faïence | < 0,1% | < 0,1% |

| | | |
|---|---|---|
| ** : Limite de détection de l'appareil GCMS estimée à 1000 ppm pour la méthode de mesure utilisée. | | |

Pour l'ensemble des cas étudiés, le traitement des surfaces contaminées avec l'invention permet de réduire les teneurs de contaminants résiduels (DMMP) à des valeurs particulièrement faibles (inférieur à 0,1%). Cela signifie qu'un litre de la solution de l'invention est capable de retirer environ 50 mL d'organophosphoré d'une surface contaminée, ce qui démontre le niveau élevé d'efficacité du composé de l'invention.

## Revendications

1. Solution utilisable pour le piégeage d'au moins un agent toxique chimique, ladite solution comprenant au moins un solvant protique, au moins un monomère comportant un groupe (alkyl)acrylique, (alkyl)acrylate ou (alkyl)acrylamide, au moins un agent de réticulation comprenant au moins deux groupes choisis parmi les groupes (alkyl)acrylique, (alkyl)acrylate ou (alkyl)acrylamide, au moins un amorceur de photopolymérisation, au moins une charge thixotrope et au moins un agent choisi parmi les halogénures alcalins, les phosphates alcalins, les sulfates alcalins et les mélanges de ceux-ci, ladite charge thixotrope étant une charge inorganique choisie parmi la silice colloïdale, la silice pyrogénée et les mélanges de celles-ci ; une charge organique choisie parmi un polyalcool vinylique et des copolymères à base de motifs acrylates et/ou méthacrylates ; et des mélanges de celles-ci.

2. Solution selon la revendication 1, dans laquelle le solvant protique est de l'eau.

3. Solution selon la revendication 1 ou 2, dans laquelle le solvant protique est présent à hauteur de 40 à 60% en volume par rapport au volume total de la solution.

4. Solution selon l'une quelconque des revendications précédentes, dans laquelle le au moins un monomère comprenant un groupe (alkyl)acrylique, un groupe (alkyl)acrylate ou un groupe (alkyl)acrylamide répond à la formule (I) suivante : 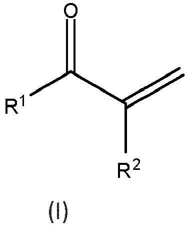 dans laquelle :
- R¹ représente -OR' avec R' représentant un atome d'hydrogène ou un élément alcalin ; -OR³ avec R³ représentant un groupe alkyle ; ou -NR⁴R⁵ avec R⁴ et R⁵ représentant, indépendamment l'un de l'autre, un atome d'hydrogène ou un groupe alkyle ;
- R² représente un atome d'hydrogène ou un groupe alkyle.

5. Solution selon l'une quelconque des revendications précédentes, dans laquelle le au moins un monomère est un monomère répondant à la formule (II) suivante : 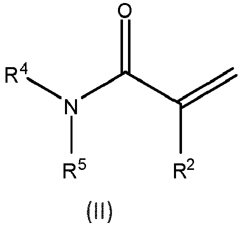 dans laquelle :
- R⁴ et R⁵ sont tels que définis à la revendication 4 ;
- R² est tel que défini à la revendication 4.

6. Solution selon l'une quelconque des revendications précédentes, dans laquelle le au moins un agent de réticulation comprend au moins deux groupes (alkyl)acrylates.

7. Solution selon l'une quelconque des revendications précédentes, dans laquelle le au moins un agent de réticulation répond à la formule (III) suivante : 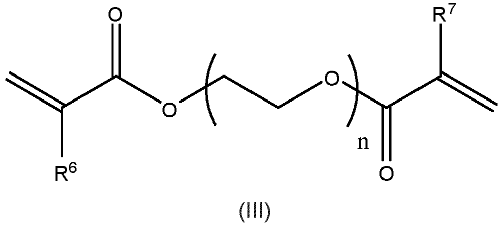 dans laquelle :
- R⁶ et R⁷ représentent, indépendamment l'un de l'autre, un atome d'hydrogène ou un groupe alkyle ;
- n correspond au nombre d'occurrence du motif pris entre parenthèse, ce nombre allant de 1 à 15.

8. Solution selon l'une quelconque des revendications précédentes, dans laquelle le au moins un agent de réticulation est présent à hauteur de 1 à 5% en volume par rapport au volume total de la solution.

9. Solution selon l'une quelconque des revendications précédentes, dans laquelle le au moins un amorceur de photopolymérisation est un amorceur de la famille des cétones aromatiques.

10. Solution selon l'une quelconque des revendications précédentes, dans laquelle l'agent est du fluorure de potassium.

11. Matériau polymérique susceptible d'être obtenu par polymérisation d'une solution telle que définie selon l'une quelconque des revendications 1 à 10, ledit matériau comprenant un polymère issu de la polymérisation du ou des monomères et du ou des agents de réticulation selon l'une quelconque des revendications 1 à 10 et piégeant, en son sein, une phase liquide comprenant au moins une charge thixotrope et au moins un agent tels que définis selon l'une quelconque des revendications 1 à 10.

12. Utilisation d'une solution telle que définie selon l'une quelconque des revendications 1 à 10 ou d'un matériau polymérique tel que défini selon la revendication 11 pour le piégeage d'au moins un agent toxique chimique.

13. Utilisation selon la revendication 12, dans laquelle l'agent toxique chimique est un composé organophosphoré.

14. Procédé de piégeage d'un agent toxique chimique présent sur une surface contaminée par ledit agent toxique chimique comprenant les étapes suivantes :
- une étape de mise en contact de la solution telle que définie selon l'une quelconque des revendications 1 à 10 avec la surface contaminée ;
- une étape de formation d'un matériau polymérique tel que défini à la revendication 11 par polymérisation du ou des monomères et du ou des agents de réticulation présents dans la solution ;
- une étape de retrait du matériau polymérique ainsi formé de ladite surface, moyennant quoi ladite surface est ainsi appauvrie voire dénuée en ledit agent toxique chimique.

15. Procédé selon la revendication 14, dans lequel l'agent toxique chimique est un composé organophosphoré.

## Patentansprüche

1. Lösung, die zum Einfangen mindestens eines chemischen Giftstoffs verwendbar ist, wobei die Lösung mindestens ein protisches Lösungsmittel, mindestens ein Monomer, das eine (alkyl)Acryl-, (alkyl)Acrylat- oder (alkyl)Acrylamidgruppe umfasst, mindestens ein Vernetzungsmittel, das mindestens zwei Gruppen umfasst, die ausgewählt sind aus (alkyl)Acryl-, (alkyl)Acrylat- oder (alkyl)Acrylamidgruppen, mindestens einen Photopolymerisationsinitiator, mindestens einen thixotropen Füllstoff und mindestens ein Mittel, das ausgewählt ist aus Alkalihalogeniden, Alkaliphosphaten, Alkalisulfaten und Mischungen davon, umfasst, wobei es sich bei dem thixotropen Füllstoff um einen anorganischen Füllstoff, ausgewählt aus kolloidalem Siliciumdioxid, pyrogenem Siliciumdioxid und Mischungen davon; einen organischen Füllstoff, ausgewählt aus einem mehrwertigen Vinylalkohol und Copolymeren auf der Basis von Acrylat- und/oder Methacrylateinheiten; und Mischungen davon handelt.

2. Lösung nach Anspruch 1, wobei das protische Lösungsmittel Wasser ist.

3. Lösung nach Anspruch 1 oder 2, wobei das protische Lösungsmittel in einer Menge von 40 bis 60 Vol.-%, bezogen auf das Gesamtvolumen der Lösung, vorhanden ist.

4. Lösung nach einem der vorhergehenden Ansprüche, wobei das mindestens eine Monomer, das eine (alkyl)Acrylgruppe, eine (alkyl)Acrylatgruppe oder eine (alkyl)Acrylamidgruppe umfasst, der folgenden Formel (I) entspricht: 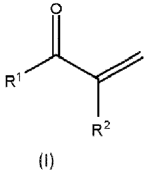 wobei:
- R¹ für -OR' steht, wobei R' für ein Wasserstoffatom oder ein Alkalielement steht; für -OR³, wobei R³ für eine Alkylgruppe steht; oder für -NR⁴R⁵, wobei R⁴ und R⁵ unabhängig voneinander für ein Wasserstoffatom oder eine Alkylgruppe stehen;
- R² für ein Wasserstoffatom oder eine Alkylgruppe steht.

5. Lösung nach einem der vorhergehenden Ansprüche, wobei es sich bei dem mindestens einen Monomer um ein Monomer mit der folgenden Formel (II) handelt: 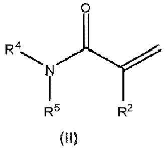 wobei
- R⁴ und R⁵ so sind, wie in Anspruch 4 definiert;
- R² so ist, wie in Anspruch 4 definiert.

6. Lösung nach einem der vorhergehenden Ansprüche, wobei das mindestens eine Vernetzungsmittel mindestens zwei (alkyl)Acrylatgruppen umfasst.

7. Lösung nach einem der vorhergehenden Ansprüche, wobei das mindestens eine Vernetzungsmittel der folgenden Formel (III) entspricht: 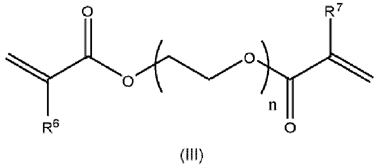 wobei:
- R⁶ und R⁷ unabhängig voneinander für ein Wasserstoffatom oder eine Alkylgruppe stehen;
- n der Anzahl des Auftretens der in Klammern gesetzten Einheit entspricht, wobei diese Zahl von 1 bis 15 reicht.

8. Lösung nach einem der vorhergehenden Ansprüche, wobei das mindestens eine Vernetzungsmittel in einer Menge von 1 bis 5 Vol.-%, bezogen auf das Gesamtvolumen der Lösung, vorhanden ist.

9. Lösung nach einem der vorhergehenden Ansprüche, wobei es sich bei dem mindestens einen Photopolymerisationsinitiator um einen Initiator aus der Familie der aromatischen Ketone handelt.

10. Lösung nach einem der vorhergehenden Ansprüche, wobei es sich bei dem Mittel um Kaliumfluorid handelt.

11. Polymeres Material, das durch Polymerisation einer Lösung, wie nach einem der Ansprüche 1 bis 10 definiert, erhalten werden kann, wobei das Material ein Polymer umfasst, das aus der Polymerisation des oder der Monomere und des oder der Vernetzungsmittel nach einem der Ansprüche 1 bis 10 hervorgegangen ist und in seinem Inneren eine flüssige Phase einschließt, die mindestens einen thixotropen Füllstoff und mindestens ein Mittel, wie nach einem der Ansprüche 1 bis 10 definiert, umfasst.

12. Verwendung einer Lösung, wie nach einem der Ansprüche 1 bis 10 definiert, oder eines polymeren Materials, wie nach Anspruch 11 definiert, zum Einfangen des mindestens einen chemischen Giftstoffes.

13. Verwendung nach Anspruch 12, wobei es sich bei dem chemischen Giftstoff um eine phosphororganische Verbindung handelt.

14. Verfahren zum Einfangen eines chemischen Giftstoffs, der auf einer mit dem chemischen Giftstoff kontaminierten Oberfläche vorhanden ist, umfassend die folgenden Schritte:
- einen Schritt des In-Kontakt-Bringens der Lösung, wie nach einem der Ansprüche 1 bis 10 definiert, mit der kontaminierten Oberfläche;
- einen Schritt der Bildung eines polymeren Materials, wie in Anspruch 11 definiert, durch Polymerisation des oder der Monomere und des oder der in der Lösung vorhandenen Vernetzungsmittel;
- einen Schritt des Entfernens des so gebildeten polymeren Materials von der Oberfläche, wodurch die Oberfläche an dem chemischen Giftstoff verarmt oder sogar von ihm befreit wird.

15. Verfahren nach Anspruch 14, wobei es sich bei dem chemischen Giftstoff um eine Organophosphorverbindung handelt.

## Claims

1. Solution which may be used for the trapping of at least one toxic chemical agent, said solution comprising at least one protic solvent, at least one monomer comprising an (alkyl)acrylic group, an (alkyl)acrylate group or an (alkyl)acrylamide group, at least one crosslinking agent comprising at least two groups chosen from among (alkyl)acrylic, (alkyl)acrylate or (alkyl)acrylamide groups, at least one photopolymerization initiator, at least one thixotropic filler and at least one agent chosen from among alkali halides, alkali phosphates, alkali sulfates and mixtures thereof, said thixotropic filler being an inorganic filler chosen from among colloidal silica, fumed silica and mixtures thereof; an organic filler chosen from among polyvinyl alcohol and copolymers based on acrylate and/or methacrylate units; and mixtures thereof.

2. Solution according to claim 1, wherein the protic solvent is water.

3. Solution according to claim 1 or 2, wherein the protic solvent is present in an amount of 40 to 60% by volume relative to the total volume of the solution.

4. Solution according to any one of the preceding claims, wherein the at least one monomer comprising an (alkyl)acrylic group, an (alkyl)acrylate group or an (alkyl)acrylamide group corresponds to the following formula (I): 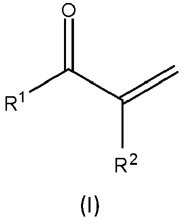 in which:
- R¹ represents -OR' with R' representing a hydrogen atom or an alkali element; -OR³ with R³ representing an alkyl group; or -NR⁴R⁵ with R⁴ and R⁵ representing, independently of each other, a hydrogen atom or an alkyl group;
- R² represents a hydrogen atom or an alkyl group.

5. Solution according to any one of the preceding claims, wherein the at least one monomer is a monomer corresponding to the following formula (II): 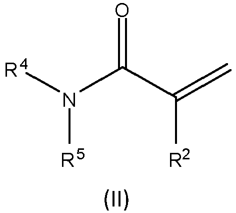 in which:
- R⁴ and R⁵ are as defined in claim 4;
- R² is as defined in claim 4.

6. Solution according to any one of the preceding claims, wherein the at least one crosslinking agent comprises at least two (alkyl)acrylate groups.

7. Solution according to any one of the preceding claims, wherein the at least one crosslinking agent corresponds to the following formula (III): 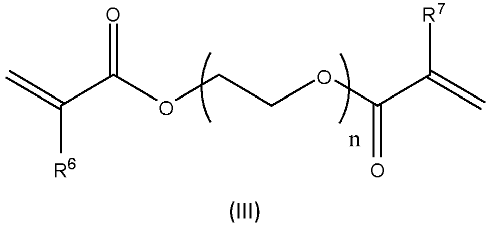 in which:
- R⁶ and R⁷ represent, independently of each other, a hydrogen atom or an alkyl group;
- n corresponds to the unit count in parenthesis, this number ranging from 1 to 15.

8. Solution according to any one of the preceding claims, wherein the at least one crosslinking agent is present in an amount of 1 to 5% by volume relative to the total volume of the solution.

9. Solution according to any one of the preceding claims, wherein the at least one photopolymerization initiator is an initiator of the aromatic ketone family.

10. Solution according to any one of the preceding claims, wherein the agent is potassium fluoride.

11. Polymeric material obtainable by polymerization of a solution as defined according to any one of claims 1 to 10, said material comprising a polymer resulting from the polymerization of the monomer(s) and of the crosslinking agent(s) according to any one of claims 1 to 10 and trapping, therein, a liquid phase comprising at least one thixotropic filler and at least one agent as defined according to any one of claims 1 to 10.

12. Use of a solution as defined in any one of claims 1 to 10 or of a polymeric material as defined in claim 11 for trapping at least one toxic chemical agent.

13. Use according to claim 12, wherein the chemical toxicant is an organophosphorus compound.

14. Method of trapping a chemical toxic agent present on a surface contaminated by said chemical toxic agent comprising the following steps:
- a step of bringing the solution as defined according to any one of claims 1 to 10 into contact with the contaminated surface;
- a step of forming a polymeric material as defined in claim 11 by polymerization of the monomer(s) and of the crosslinking agent(s) present in the solution;
- a step of removing the polymeric material thus formed from said surface, by means of which said surface is thus depleted or even devoid of said chemical toxic agent.

15. Method according to claim 14, wherein the chemical toxicant is an organophosphorus compound.
